(19) **Europäisches Patentamt**
**European Patent Office**
**Office européen des brevets**

(11) **EP 2 571 221 B1**

(12) **EUROPEAN PATENT SPECIFICATION**

(45) Date of publication and mention
of the grant of the patent:
**14.06.2017 Bulletin 2017/24**

(51) Int Cl.:
*H04L 27/26* (2006.01)      *H04L 5/00* (2006.01)

(21) Application number: **12194149.6**

(22) Date of filing: **09.12.2008**

(54) **Method for physical control format indicator channel mapping**

Verfahren zur Abbildung eines physischen Steuerformatkennnungskanals

Procédé pour le mappage de canal indicateur de format de contrôle physique

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.12.2007 US 13281 P**
**02.09.2008 KR 20080086368**

(43) Date of publication of application:
**20.03.2013 Bulletin 2013/12**

(62) Document number(s) of the earlier application(s) in accordance with Art. 76 EPC:
**08171130.1 / 2 071 790**

(73) Proprietor: **LG Electronics Inc.**
**Yeongdeungpo-gu**
**Seoul 150-721 (KR)**

(72) Inventors:
• **Lee, Jung Hoon**
**GYEONGGI-DO 431-749 (KR)**
• **Ahn, Joon Kui**
**GYEONGGI-DO 431-749 (KR)**

(74) Representative: **Cabinet Plasseraud**
**66 rue de la Chaussée d'Antin**
**75440 Paris Cedex 09 (FR)**

(56) References cited:
**EP-A2- 1 819 118**

• **"3rd Generation Partnership Project; Technical Specification Group Radio Access Network; Evolved Universal Terrestrial Radio Access (E-UTRA); Physical Channels and Modulation (Release 8)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 November 2007 (2007-11-01), pages 1-54, XP050377533,**
• **SAMSUNG: "PCFICH Mapping for One Transmitter Antenna", 3GPP DRAFT; R1-074769 1 TX ANT. CCFI-RE MAP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071031, 31 October 2007 (2007-10-31), XP050108238,**
• **SAMSUNG: "PHICH/PDCCH to RE mapping", 3GPP DRAFT; R1-074773 PHICH PDCCH-TO RE MAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071031, 31 October 2007 (2007-10-31), XP050108242,**
• **LG ELECTRONICS: "Correction on the PCFICH to RE mapping", 3GPP DRAFT; R1-080369 CORRECTION ON THE PCFICH TO RE MAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sevilla, Spain; 20080108, 8 January 2008 (2008-01-08), XP050108888,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a mapping method for frequency and orthogonal frequency division multiplexing (OFDM) symbol regions of a signal transmitted in downlink in a cellular OFDM wireless packet communication system, and more particularly, to a mapping method which is capable of solving a problem of wasting resource elements or not being able to implement mapping by applying a simple mapping rule while mapping symbols of a physical control format indicator channel (PCFICH).

Background Art

When transmitting data through downlink of an OFDM wireless packet communication system, if each user equipment is informed of how many OFDM symbols are used to transmit a control channel, the user equipment has many advantages in using information of the control channel. Especially, a 3GPP LTE system defines a channel notifying the number of OFDM symbols used for the control channel as a physical control format indicator channel (PCFICH).

More specifically, in the 3GPP LTE system, the PCFICH is expressed as 2 bits indicating three states according to whether the number of OFDM symbols used to transmit the control channel is 1, 2, or 3. The 2 bits are increased to 32 bits through channel coding and then expressed as 16 quadrature phase shift keying (QPSK) symbols through QPSK modulation. The PCFICH is always transmitted only through the first OFDM symbol of a subframe and a mapping method in a frequency region for transmission is as follows.

$y(0),...,y(3)$ are mapped to resource elements starting with a position of $k=k_0$, $y(4),...,y(7)$ are mapped to resource elements starting with a position of $k = k_0 + \left\lfloor N_{\mathrm{RB}}^{\mathrm{DL}} N_{\mathrm{sc}}^{\mathrm{RB}} / 4 \right\rfloor$, $y(8),...,y(11)$ are mapped to resource elements starting with a position of $k = k_0 + \left\lfloor 2 N_{\mathrm{RB}}^{\mathrm{DL}} N_{\mathrm{sc}}^{\mathrm{RB}} / 4 \right\rfloor$, and $y(12),...,y(15)$ are mapped to resource elements starting with a position of $k = k_0 + \left\lfloor 3 N_{\mathrm{RB}}^{\mathrm{DL}} N_{\mathrm{sc}}^{\mathrm{RB}} / 4 \right\rfloor$. Here, a value $k_0$ for shifting a starting point is

$$k_0 = \left( N_{\mathrm{sc}}^{\mathrm{RB}} / 2 \right) \cdot \left( N_{\mathrm{ID}}^{\mathrm{cell}} \bmod 2 N_{\mathrm{RB}}^{\mathrm{DL}} \right).$$

The above additions include a modular operation of $N_{\mathrm{RB}}^{\mathrm{DL}} N_{\mathrm{sc}}^{\mathrm{RB}}$, and $N_{\mathrm{ID}}^{\mathrm{cell}}$ denotes a physical layer cell identification (ID).

In the above mapping rule, $y(0),...,y(15)$ denote 16 QPSK symbols, $N_{\mathrm{RB}}^{\mathrm{DL}}$ denotes the number of resource blocks transmitted in downlink, and $N_{\mathrm{sc}}^{\mathrm{RB}}$ denotes the number of resource elements per resource block. $k_0$ is determined according to the cell ID $N_{\mathrm{ID}}^{\mathrm{cell}}$ which varies with each cell. Starting with $k_0$, the symbols are dispersed in four frequency regions comprised of 4 adjacent resource elements which are not used for transmission of a reference signal (RS) to obtain a frequency diversity gain over all downlink frequency bands, and then transmitted. The reason why the 4 adjacent resource elements which are not used for transmission of the reference signal are used is that since other control channels are constructed with a resource element group (REG) comprised of 4 adjacent resource elements which are not used for transmission of the REFERENCE SIGNAL, multiplexing of a PCFICH with other control channels can be efficiently performed using the same mapping method. The above mentioned mapping methods are disclosed in "3rd Generation Partnership Project; Technical Specification Group Radio Access Network; Evolved Universal Terrestrial Radio Access (E-UTRA); Physical Channels and Modulation (Release 8), 3GPP TS 36.211 v. 8.1.0". However, when mapping symbols for the PCFICH according to the above-described mapping method, there may be the following disadvantages.

First, if and $N_{\mathrm{sc}}^{\mathrm{RB}}$ is 12 in a general subframe structure of a 3GPP LTE system, the second and fourth frequency regions among 4 frequency regions are mapped over 2 REGs when $N_{\mathrm{RB}}^{\mathrm{DL}}$ is an odd number.

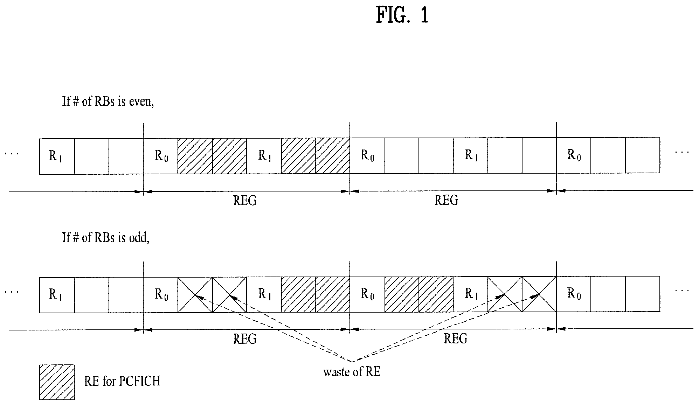

FIG. 1 illustrates a conventional mapping method in which 4 symbols are mapped to 2 REGs.

As illustrated in FIG. 1, if $N_{\mathrm{RB}}^{\mathrm{DL}}$ is an even number, 4 frequency regions for transmission of a PCFICH are identical to units of an REG for transmission of other control channels. However, if $N_{\mathrm{RB}}^{\mathrm{DL}}$ is an odd number, the second and fourth frequency regions are mapped over 2 REGs. In this case, since an REG is comprised of 4 adjacent resource elements which are not used for transmission of a reference signal, resource elements remaining at both sides of the 4 adjacent resource elements can not be used for transmission of a control channel, thereby wasting resources.

Second, the above-described mapping rule has a region in which mapping can not be implemented.

A frequency mapping region varies with $N_{\mathrm{ID}}^{\mathrm{cell}}$ which is unique for each cell. Hence, cells having adjacent cell IDs may reduce interference caused by transmission of a PCFICH. This $N_{\mathrm{ID}}^{\mathrm{cell}}$ is comprised of 504 values ranging from 0 to 503 according to a current 3GPP LTE standard. When $N_{\mathrm{RB}}^{\mathrm{DL}}$ is an odd number, a region in which frequency mapping for PCFICH transmission can not be performed occurs according to $N_{\mathrm{ID}}^{\mathrm{cell}}$.

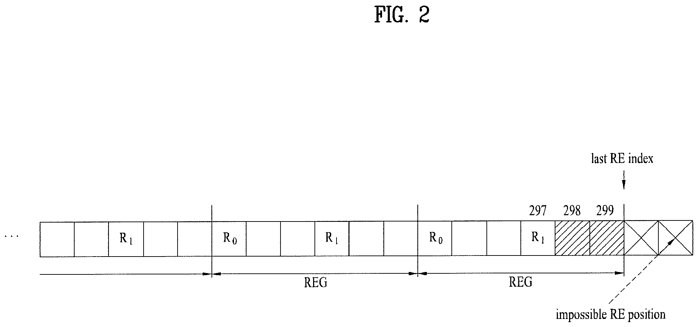

FIG. 2 illustrates the case where a region in which mapping can not be implemented occurs in a frequency region for PCFICH transmission according to $N_{\mathrm{ID}}^{\mathrm{cell}}$. For example, if $N_{\mathrm{RB}}^{\mathrm{DL}}$ is 25, $N_{\mathrm{ID}}^{\mathrm{cell}}$ is 12, and $N_{\mathrm{sc}}^{\mathrm{RB}}$ is 12, a frequency region allocated to 4 successive resource elements deviates from a frequency region in which a PCFICH should actually be transmitted. In this case, the PCFICH can not be allocated to a corresponding region. EP1189118 is directed to a method and apparatus for allocating resources and signalling the allocated resources in an FDMA communication system where different frequency resources are allocated to different UEs for data transmission, however it is far from the solution, which will be explained, to the above mentioned problem.

Disclosure

Technical Problem

An object of the present invention devised to solve the problem lies in providing a method which can solve a problem of wasting resource elements or having difficulty in mapping while mapping symbols for a PCFICH.

Technical Solution

The object of the present invention can be achieved by the present set of claims 1 to 6.

Advantageous Effects

In accordance with the exemplary embodiments of the present invention, a problem of wasting resource elements or not being able to implement mapping can be solved by applying a simple mapping rule while mapping symbols of a PCFICH.

Description of Drawings

The accompanying drawings, which are included to provide a further understanding of the invention, illustrate embodiments of the invention and together with the description serve to explain the principle of the invention.
In the drawings:

FIG. 1 illustrates a conventional mapping method in which 4 symbols are mapped to 2 REGs;
FIG. 2 illustrates the case where mapping can not be implemented in a conventional mapping method;
FIG. 3 is a flow chart illustrating a PCFICH mapping method according to an exemplary embodiment of the present invention; mapping method;
FIG. 4 is a flow chart illustrating a PCFICH mapping method according to another exemplary embodiment of the present invention; mapping method;
FIG. 5 illustrates an example of REGs when 2 or less transmit antennas are used; mapping method;
FIG. 6 illustrates an example of REGs when 4 transmit antennas are used; and mapping method;

FIG. 7 illustrates an example of PCFICH mapping according to a cell ID.

Best Mode

Reference will now be made in detail to the exemplary embodiments of the present invention with reference to the accompanying drawings. The detailed description is intended to explain exemplary embodiments of the present invention, rather than to show the only embodiments that can be implemented according to the invention.

In an exemplary embodiment of the present invention, a method applying different mapping rules according to $N_{RB}^{DL}$ is proposed.

In a conventional mapping method, the above-described problems do not occur for $N_{RB}^{DL}$ of an even number, so the conventional mapping method is used for $N_{RB}^{DL}$ of an even number and the following mapping method is used for $N_{RB}^{DL}$ of an odd number.

Hereinbelow, y(0),...,y(15) denotes 16 QPSK symbols, $N_{RB}^{DL}$ denotes the number of resource blocks transmitted in downlink, and $N_{sc}^{RB}$ denotes the number of resource elements per resource block.

According to an exemplary embodiment of the present invention, if $N_{RB}^{DL}$ is an odd number, y(0),...,y(3) are mapped to resource elements starting with a position of $k=k_0$, y(4),...,y(7) are mapped to resource elements starting with a position of $k = k_0 + \left\lfloor \left(N_{RB}^{DL} - 1\right)N_{sc}^{RB}/4 \right\rfloor$, y(8),...,y(11) are mapped to resource elements starting with a position of $k = k_0 + \left\lfloor 2N_{RB}^{DL}N_{sc}^{RB}/4 \right\rfloor$ or $k = k_0 + \left\lfloor 2\left(N_{RB}^{DL} - 1\right)N_{sc}^{RB}/4 \right\rfloor$, and y(12),...,y(15) are mapped to resource elements starting with a position of $k = k_0 + \left\lfloor 3\left(N_{RB}^{DL} - 1\right)N_{sc}^{RB}/4 \right\rfloor$.

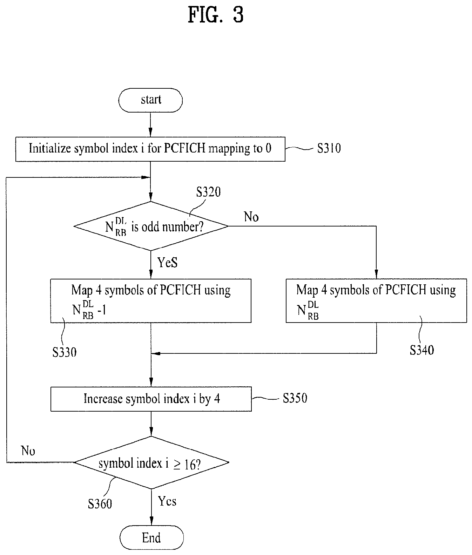

FIG. 3 is a flow chart illustrating a PCFICH mapping method according to an exemplary embodiment of the present invention.

A symbol index i for PCFICH mapping is initialized to 0 (step S310).

Next, a determination is made as to whether $N_{RB}^{DL}$ is an odd number (step S320). If $N_{RB}^{DL}$ is an odd number, positions of resource elements to map 4 symbols of a PCFICH are determined using $N_{RB-1}^{DL}$ and the 4 symbols are mapped to corresponding positions (step S330).

If $N_{RB}^{DL}$ is an even number, positions of resource elements to map 4 symbols of a PCFICH are determined using $N_{RB}^{DL}$ and the 4 symbols are mapped to corresponding positions (step S340).

If mapping is completed, the symbol index i is increased by 4 (step S350).

If the symbol index i is less than 16 (step S360), the above operations (steps S320 to S350) are repeated since symbols to be mapped remain.

Finally, if the symbol index i is equal to or greater than 16 (S360), a procedure is ended.

Meanwhile, another exemplary embodiment of the present invention proposes a single mapping method irrespective of whether $N_{RB}^{DL}$ is an odd number or an even number.

That is, the following mapping rule using a single expression regardless of $N_{RB}^{DL}$ can solve the conventional problems in mapping symbols for a PCFICH.

According to another exemplary embodiment of the present invention, y(0),...,y(3) are mapped to resource elements starting with a position of $k=k_0$, y(4),..., y(7) are mapped to resource elements starting with a position of $k = k_0 + \left\lfloor N_{RB}^{DL}/2 \right\rfloor \cdot N_{sc}^{RB}/2$, y(8),...,y(11) are mapped to resource elements starting with a position of $k = k_0 + \left\lfloor 2N_{RB}^{DL}/2 \right\rfloor \cdot N_{sc}^{RB}/2$, and y(12),...,y(15) are mapped to resource elements starting with a position of $k = k_0 + \left\lfloor 3N_{RB}^{DL}/2 \right\rfloor \cdot N_{sc}^{RB}/2$.

In the above method, $k_0$ is determined according to $N_{ID}^{cell}$. If an index indicated by $k_0$ collides with an index of a resource element using a reference signal, $k_0$ may use an index increased by '1'.

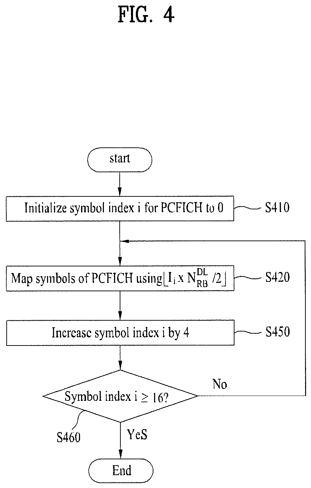

FIG. 4 is a flow chart illustrating a PCFICH mapping method according to another exemplary embodiment of the present invention.

First, a symbol index i for PCFICH mapping is initialized to 0 (step S410).

A start position of a resource element for PCFICH mapping is determined by flooring a value obtained by multiplying a variable $I_i$ proportional to the symbol index by $N_{RB}^{DL}$ and then dividing the multiplied result by 2 (step S420). The variable may be, for example, $I_0$= 0, $I_4$= 1, $I_8$= 2, and $I_{12}$= 3.

If mapping is completed, the symbol index i is increased by 4 (step S450).

If the symbol index i is less than 16 (step S460), the above operations (steps S420 to S450) are repeated since symbols to be mapped remain.

Finally, if the symbol index i is equal to or greater than 16 (S460), a procedure is ended.

The above mapping rule according to another exemplary embodiment of the present invention may be modified as follows.

Namely, y(0),...,y(3) are mapped to resource elements starting with a position of $k=k_0$, y(4),...,y(7) are mapped to resource elements starting with a position of $k = k_0 + \left\lfloor N_{RB}^{DL}/2 \right\rfloor \cdot N_{sc}^{RB}/2$, y(8),...,y(11) are mapped to resource elements starting with a position of $k = k_0 + 2\left\lfloor N_{RB}^{DL}/2 \right\rfloor \cdot N_{sc}^{RB}/2$, and (12),...,y(15) are mapped to resource elements starting with a position of $k = k_0 + 3\left\lfloor N_{RB}^{DL}/2 \right\rfloor \cdot N_{sc}^{RB}/2$.

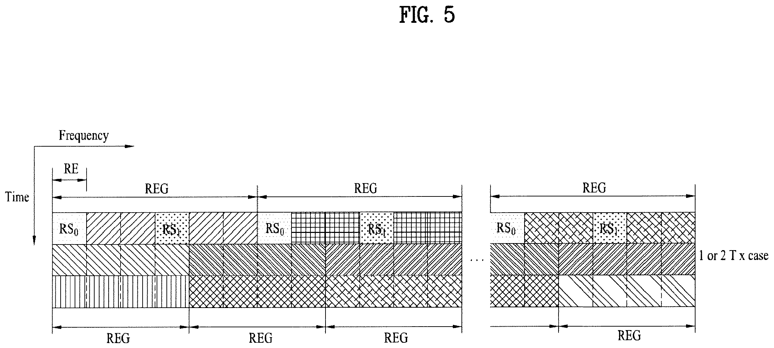

FIG. 5 illustrates an example of REGs when two or less transmit antennas are used.

In the first OFDM symbol (first line) through which a PCFICH is transmitted, since reference signals of respective antennas are transmitted, one REG is comprised of 6 resource elements. Since no reference signal exists in the second OFDM symbol (second line) when using 2 or less transmit antennas, one REG is comprised of 4 resource elements.

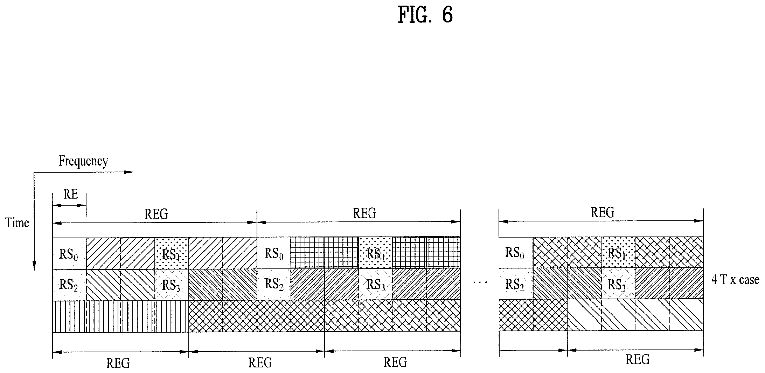

FIG. 6 illustrates an example of REGs when 4 transmit antennas are used.

In the first OFDM symbol (first line) through which a PCFICH is transmitted, since reference signals of antennas are transmitted, one REG is comprised of 6 resource elements. When using 4 transmit antennas, since reference signals exist even in the second OFDM symbol (second line), one REG is comprised of 6 resource elements.

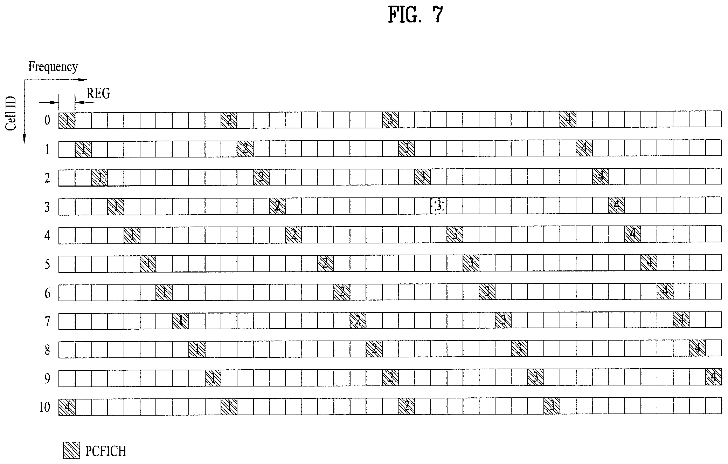

FIG. 7 illustrates an example of PCFICH mapping according to a cell ID.

In FIG. 7, a system band corresponds to 20 resource blocks. Different start positions are set for 10 cell IDs. Positions denoted by "1" indicate positions of $k_0$ in the above-described mapping method. Accordingly, interference between cell IDs is reduced.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

Industrial Applicability

The present invention provides a mapping method for frequency and OFDM symbol regions of a signal transmitted in downlink in a cellular OFDM wireless packet communication system and is applicable to a base station, a user equipment, etc. in a 3GPP LTE system.

**Claims**

1. A method of transmitting physical control format indicator channel (PCFICH) symbols in a downlink subframe to a user equipment (UE), the method comprising:

   mapping 16 PCFICH symbols to four resource element groups (REGs) in a first OFDM symbol of the downlink subframe; and
   transmitting the mapped 16 PCFICH symbols,
   wherein the four resource element groups comprises a first resource element group including first four resource elements, a second resource element group including second four resource elements, a third resource element group including third four resource elements and a fourth resource element group including fourth four resource elements,
   wherein first resource elements from the first four resource elements, the second four resource elements, the third four resource elements and the fourth four resource elements have positions given by:

$$K_0,$$

$$K_0 + \lfloor N_{RB}^{DL}/2 \rfloor * N_{SC}^{RB}/2,$$

$$K_0 + \lfloor 2N_{RB}^{DL}/2 \rfloor * N_{SC}^{RB}/2,$$

   and

$$K_0 + \lfloor 3N_{RB}^{DL}/2 \rfloor * N_{SC}^{RB}/2,$$

   respectively,
   wherein '$N_{SC}^{RB}$' indicates a number of resource elements per resource block in the frequency domain, $N_{RB}^{DL}$ is the number of resource blocks in downlink, and
   wherein $K_0 = (N_{SC}^{RB}/2) \cdot (N_{ID}^{cell} \bmod 2\ N_{RB}^{DL})$, $N_{ID}^{cell}$ being a physical layer cell identifier.

2. The method of claim 1, wherein the $N_{SC}^{RB}$ is 12.

3. The method of claim 1, further comprising:

   transmitting reference signals to the UE,
   wherein each of the first resource element group, the second resource element group, the third resource element group and the fourth resource element group has 6 contiguous resource elements in the first OFDM symbol of the downlink subframe, and 2 of the 6 contiguous resource elements are used for the reference signals.

4. A method of receiving physical control format indicator channel (PCFICH) symbols in a downlink subframe by a user equipment (UE), the method comprising:

   receiving 16 PCFICH symbols via a first OFDM symbol of the downlink subframe, wherein the 16 PCFICH symbols are mapped to four resource element groups (REGs), wherein the four resource element groups comprises a first resource element group including first four resource elements, a second resource element group including second four resource elements, a third resource element group including third four resource elements and a fourth resource element group including fourth four resource elements, wherein first resource elements from the first four resource elements, the second four resource elements, the third four resource elements and the fourth four resource elements have positions given by:

$$K_0,$$

$$K_0 + \lfloor N_{RB}^{DL}/2 \rfloor * N_{SC}^{RB}/2,$$

$$K_0 + \lfloor 2N_{RB}^{DL}/2 \rfloor * N_{SC}^{RB}/2,$$

and

$$K_0 + \lfloor 3N_{RB}^{DL}/2 \rfloor * N_{SC}^{RB}/2,$$

respectively, and wherein

'$N_{SC}^{RB}$' indicates a number of resource elements per resource block in the frequency domain,
wherein $K_0 = (N_{SC}^{RB}/2) . (N_{ID}^{cell} \bmod 2 \, N_{RB}^{DL})$, $N_{ID}^{cell}$ being a physical layer cell identifier, $N_{RB}^{DL}$ is the number of resource blocks in downlink; and
acquiring information about a number of OFDM symbols used for a control channel based on the received 16 PCFICH symbols.

**5.** The method of claim 4, wherein the $N_{SC}^{RB}$ is 12.

**6.** The method of claim 4, further comprising:

receiving reference signals by the UE,
wherein each of the first resource element group, the second resource element group, the third resource element group and the fourth resource element group has 6 contiguous resource elements in the first OFDM symbol of the downlink subframe, and 2 of the 6 contiguous resource elements are used for the reference signals.

**Patentansprüche**

**1.** Verfahren zur Übertragung von PCFICH-Symbolen (PCFICH = Physical Control Format Indicator Channel (physischer Steuerformatkennungskanal)) in einem Downlink-Subframe an ein Benutzergerät (UE), wobei das Verfahren umfasst:

Abbilden von 16 PCFICH-Symbolen auf vier Ressourcenelementgruppen (REGs) in einem ersten OFDM-Symbol des Downlink-Subframes; und
Übertragen der abgebildeten 16 PCFICH-Symbole,
wobei die vier Ressourcenelementgruppen umfassen: eine erste Ressourcenelementgruppe, die erste vier Ressourcenelemente einschließt, eine zweite Ressourcenelementgruppe, die zweite vier Ressourcenelemente einschließt, eine dritte Ressourcenelementgruppe, die dritte vier Ressourcenelemente einschließt, und eine vierte Ressourcenelementgruppe, die vierte vier Ressourcenelemente einschließt,
wobei erste Ressourcenelemente aus den ersten vier Ressourcenelementen, den zweiten vier Ressourcenelementen, den dritten vier Ressourcenelementen und den vierten vier Ressourcenelementen Positionen aufweisen, die angegeben sind durch:

$$K_0,$$

$$K_0 \ + \ \lfloor N_{RB}{}^{DL}/2 \rfloor * N_{SC}{}^{RB}/2,$$

$$K_0 \ + \ \lfloor 2N_{RB}{}^{DL}/2 \rfloor * N_{SC}{}^{RB}/2, \qquad\qquad bzw.$$

$$K_0 \ + \ \lfloor 3N_{RB}{}^{DL}/2 \rfloor * N_{SC}{}^{RB}/2,$$

wobei 'N$_{sc}{}^{RB}$' eine Zahl von Ressourcenelementen pro Ressourcenblock im Frequenzbereich angibt, N$_{RB}{}^{DL}$ die Zahl von Ressourcenblöcken in der Downlink-Richtung ist und wobei K$_0$ = (N$_{sc}{}^{RB}$ /2).(N$_{ID}{}^{cell}$mod2 N$_{RB}{}^{DL}$), wobei N$_{ID}{}^{cell}$ ein Bezeichner einer Zelle der physikalischen Schicht ist.

**2.** Verfahren nach Anspruch 1, wobei die N$_{SC}{}^{RB}$ 12 ist.

**3.** Verfahren nach Anspruch 1, ferner umfassend:

Übertragen von Bezugssignalen an das UE,
wobei die erste Ressourcenelementgruppe, die zweite Ressourcenelementgruppe, die dritte Ressourcenelementgruppe und die vierte Ressourcenelementgruppe jeweils 6 unmittelbar aufeinander folgende Ressourcenelemente in dem ersten OFDM-Symbol des Downlink-Subframes aufweisen und 2 der 6 unmittelbar aufeinander folgenden Ressourcenelemente für die Bezugssignale verwendet werden.

**4.** Verfahren zum Empfangen von PCFICH-Symbolen (PCFICH = Physical Control Format Indicator Channel (physischer Steuerformatkennungskanal)) in einem Downlink-Subframe durch ein Benutzergerät (UE), wobei das Verfahren umfasst:

Empfangen von 16 PCFICH-Symbolen über ein erstes OFDM-Symbol des Downlink-Subframes, wobei die 16 PCFICH-Symbole auf vier Ressourcenelementgruppen (REGs) abgebildet werden, wobei die vier Ressourcenelementgruppen umfassen: eine erste Ressourcenelementgruppe, die erste vier Ressourcenelemente einschließt, eine zweite Ressourcenelementgruppe, die zweite vier Ressourcenelemente einschließt, eine dritte Ressourcenelementgruppe, die dritte vier Ressourcenelemente einschließt, und eine vierte Ressourcenelementgruppe, die vierte vier Ressourcenelemente einschließt, wobei erste Ressourcenelemente aus den ersten vier Ressourcenelementen, den zweiten vier Ressourcenelementen, den dritten vier Ressourcenelementen und den vierten vier Ressourcenelementen Positionen aufweisen, die angegeben sind durch:

$$K_0,$$

$$K_0 \ + \ \lfloor N_{RB}{}^{DL}/2 \rfloor * N_{SC}{}^{RB}/2,$$

$$K_0 \ + \ \lfloor 2N_{RB}{}^{DL}/2 \rfloor * N_{SC}{}^{RB}/2,$$

$$K_0 \ + \ \lfloor 3N_{RB}{}^{DL}/2 \rfloor * N_{SC}{}^{RB}/2 \qquad\qquad bzw.$$

und wobei 'N$_{SC}{}^{RB}$' eine Zahl von Ressourcenelementen pro Ressourcenblock im Frequenzbereich angibt, wobei K$_0$ = (N$_{sc}{}^{RB}$/2). (N$_{ID}{}^{cell}$mod2 N$_{RB}{}^{DL}$), wobei N$_{ID}{}^{cell}$ ein Bezeichner einer Zelle der physikalischen Schicht ist, N$_{RB}{}^{DL}$ die Zahl von Ressourcenblöcken in der Downlink-Richtung ist; und Erfassen von Informationen über eine Zahl von OFDM-Symbolen, verwendet für einen Steuerkanal, auf der Grundlage der empfangenen 16 PCFICH-Symbole.

**5.** Verfahren nach Anspruch 4, wobei die N$_{SC}{}^{RB}$ 12 ist.

**6.** Verfahren nach Anspruch 4, ferner umfassend:

Empfangen von Bezugssignalen durch das UE,

wobei die erste Ressourcenelementgruppe, die zweite Ressourcenelementgruppe, die dritte Ressourcenelementgruppe und die vierte Ressourcenelementgruppe jeweils 6 unmittelbar aufeinander folgende Ressourcenelemente in dem ersten OFDM-Symbol des Downlink-Subframes aufweisen und 2 der 6 unmittelbar aufeinander folgenden Ressourcenelemente für die Bezugssignale verwendet werden.

**Revendications**

**1.** Procédé de transmission de symboles de canal indicateur de format de commande physique (PCFICH) dans une sous-trame de liaison descendante à destination d'un équipement d'utilisateur (UE), le procédé comprenant :

le mappage de 16 symboles PCFICH sur quatre groupes d'éléments de ressources (REG) dans un premier symbole OFDM de la sous-trame de liaison descendante ; et
la transmission des 16 symboles PCFICH mappés,
dans lequel les quatre groupes d'éléments de ressources comprennent un premier groupe d'éléments de ressources comprenant quatre premiers éléments de ressources,
un deuxième groupe d'éléments de ressources comprenant quatre deuxièmes éléments de ressources, un troisième groupe d'éléments de ressources comprenant quatre troisièmes éléments de ressources et un quatrième groupe d'éléments de ressources comprenant quatre quatrièmes éléments de ressources,
dans lequel des premiers éléments de ressources parmi les quatre premiers éléments de ressources, les quatre deuxièmes éléments de ressources, les quatre troisièmes éléments de ressources et les quatre quatrièmes éléments de ressources ont des positions données par :

$$K_0,$$

$$K_0 + \lfloor N_{RB}^{DL}/2 \rfloor * N_{SC}^{RB}/2,$$

$$K_0 + \lfloor 2N_{RB}^{DL}/2 \rfloor * N_{SC}^{RB}/2,$$

et

$$K_0 + \lfloor 3N_{RB}^{DL}/2 \rfloor * N_{SC}^{RB}/2,$$

respectivement, dans lequel $N_{SC}^{RE}$ indique un nombre d'éléments de ressources par bloc de ressources dans le domaine de fréquence, $N_{RB}^{DL}$ est le nombre de blocs de ressources dans la liaison descendante, et dans lequel $K_0 = (N_{SC}^{RB}/2).(N_{ID}^{cell} mod 2\, N_{RB}^{RL})$, $N_{ID}^{cell}$ étant un identifiant de cellule de couche physique.

**2.** Procédé selon la revendication 1, dans lequel $N_{SC}^{RB}$ est 12.

**3.** Procédé selon la revendication 1, comprenant en outre :

la transmission de signaux de référence à l'UE,
dans lequel chacun du premier groupe d'éléments de ressources, du deuxième groupe d'éléments de ressources, du troisième groupe d'éléments de ressources et du quatrième groupe d'éléments de ressources comprend 6 éléments de ressources contigus dans le premier symbole OFDM de la sous-trame de liaison descendante, et 2 des 6 éléments de ressources contigus sont utilisés pour les signaux de référence.

**4.** Procédé de réception de symboles de canal indicateur de format de commande physique (PCFICH) dans une sous-trame de liaison descendante par un équipement d'utilisateur (UE), le procédé comprenant :

la réception de 16 symboles PCFICH par l'intermédiaire d'un premier symbole OFDM de la sous-trame de liaison descendante, dans lequel les 16 symboles PCFICH sont mappés sur quatre groupes d'éléments de ressources (REG), dans lequel les quatre groupes d'éléments de ressources comprennent un premier groupe d'éléments de ressources comprenant quatre premiers éléments de ressources, un deuxième groupe d'éléments de ressources comprenant quatre deuxièmes éléments de ressources, un troisième groupe d'éléments de ressources comprenant quatre troisièmes éléments de ressources et un quatrième groupe d'éléments de ressources comprenant quatre quatrièmes éléments de ressources, dans lequel des premiers éléments de ressources parmi les quatre premiers éléments de ressources, les quatre deuxièmes éléments de ressources, les quatre troisièmes éléments de ressources et les quatre quatrièmes éléments de ressources ont des positions données par :

$$K_0,$$

$$K_0 + \lfloor N_{RB}^{DL}/2 \rfloor * N_{SC}^{RB}/2,$$

$$K_0 + \lfloor 2N_{RB}^{DL}/2 \rfloor * N_{SC}^{RB}/2,$$

et

$$K_0 + \lfloor 3N_{RB}^{DL}/2 \rfloor * N_{SC}^{RB}/2,$$

respectivement,

dans lequel $N_{SC}^{RB}$ indique un nombre d'éléments de ressources par bloc de ressources dans le domaine de fréquence,

dans lequel $K_0 = (N_{SC}^{RB}/2) . (N_{ID}^{cell} mod 2\, N_{RB}^{RL})$, $N_{ID}^{cell}$ étant un identifiant de cellule de couche physique, $N_{RB}^{DL}$ est le nombre de blocs de ressources dans la liaison descendante ; et

l'acquisition d'informations relatives à un nombre de symboles OFDM utilisés pour un canal de commande sur la base des 16 symboles PCFICH reçus.

**5.** Procédé selon la revendication 4, dans lequel $N_{SC}^{RB}$ est 12.

**6.** Procédé selon la revendication 4, comprenant en outre :

la réception de signaux de référence par l'UE,
dans lequel chacun du premier groupe d'éléments de ressources, du deuxième groupe d'éléments de ressources, du troisième groupe d'éléments de ressources et du quatrième groupe d'éléments de ressources comprend 6 éléments de ressources contigus dans le premier symbole OFDM de la sous-trame de liaison descendante, et 2 des 6 éléments de ressources contigus sont utilisés pour les signaux de référence.

EP 2 571 221 B1

# FIG. 1

If # of RBs is even,

| $R_1$ | | | $R_0$ | | | $R_1$ | | | $R_0$ | | | $R_1$ | | | $R_0$ | | |

REG    REG

If # of RBs is odd,

| $R_1$ | | | $R_0$ | | | $R_1$ | | | $R_0$ | | | $R_1$ | | | $R_0$ | | |

REG    REG

waste of RE

RE for PCFICH

FIG. 2

FIG. 3

```
                    ┌─────────┐
                    │  start  │
                    └─────────┘
                         │
   ┌──────────────────────────────────────────┐
   │ Initialize symbol index i for PCFICH mapping to 0 │─── S310
   └──────────────────────────────────────────┘
                         │
                         │         S320
                       ╱─┴─╲
                      ╱     ╲           No
          ╱─────────╱ N_RB^DL is odd ╲─────────────┐
                     ╲  number?      ╱              │
                      ╲             ╱               │
                       ╲───┬───────╱                │
                        YeS │                        │
   ┌──────────────────────┐              ┌──────────────────────┐
   │ Map 4 symbols of PCFICH │          │ Map 4 symbols of PCFICH │
   │ using N_RB^DL -1        │          │ using N_RB^DL           │
   └──────────────────────┘              └──────────────────────┘
     S330 │                                          S340
          └──────────────┬───────────────────────────┘
                         │
   ┌──────────────────────────────────┐
   │   Increase symbol index i by 4   │─── S350
   └──────────────────────────────────┘
                         │
                       ╱─┴─╲
            No        ╱     ╲
   ┌────────────────╱ symbol  ╲
   │                ╲ index i ≥ 16? ╱
   │                 ╲           ╱
   │              S360 ╲───┬───╱
   │                    Yes │
   │                   ┌─────────┐
   │                   │   End   │
   │                   └─────────┘
   └─────────────(back to S320)
```

Initialize symbol index i for PCFICH mapping to 0 — S310

S320

$N_{RB}^{DL}$ is odd number?    No

YeS

Map 4 symbols of PCFICH using $N_{RB}^{DL}$ -1

Map 4 symbols of PCFICH using $N_{RB}^{DL}$

S330

S340

Increase symbol index i by 4 — S350

No

symbol index i ≥ 16?

S360    Yes

End

# FIG. 4

```
            ( start )
                │
                ▼
┌──────────────────────────────────────┐
│ Initialize symbol index i for PCFICH to 0 │──── S410
└──────────────────────────────────────┘
                │
                ▼
┌──────────────────────────────────────┐
│ Map symbols of PCFICH using ⌊Iᵢ x N_RB^DL /2⌋ │──── S420
└──────────────────────────────────────┘
                │
                ▼
┌──────────────────────────────────────┐
│      Increase symbol index i by 4       │──── S450
└──────────────────────────────────────┘
                │
                ▼
          ╱─────────────╲        No
         ╱  Symbol index  ╲──────────────┐
         ╲    i ≥ 16?      ╱              │
          ╲───────────────╱              │
      S460        │ YeS
                  ▼
             ( End )
```

$$\lfloor I_i \times N_{RB}^{DL} /2 \rfloor$$

# FIG. 5

# FIG. 6

FIG. 7

**EP 2 571 221 B1**

**Patent documents cited in the description**

- EP 1189118 A